(19) Europäisches Patentamt
European Patent Office
Office européen des brevets

(11) **EP 4 235 291 A1**

(12) **EUROPEAN PATENT APPLICATION**
published in accordance with Art. 153(4) EPC

(43) Date of publication:
**30.08.2023 Bulletin 2023/35**

(51) International Patent Classification (IPC):
*G02F 1/225* (2006.01)

(21) Application number: **21882217.9**

(86) International application number:
**PCT/ES2021/070761**

(22) Date of filing: **20.10.2021**

(87) International publication number:
**WO 2022/084566 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2020 ES 202031056**

(71) Applicant: **Universitat Politècnica de València**
**46022 Valencia (ES)**

(72) Inventors:
• **TORRIJOS MORÁN, Luis**
  **46022 Valencia (ES)**
• **GARCÍA RUPÉREZ, Jaime**
  **46022 Valencia (ES)**

(74) Representative: **Manuel Illescas y Asociados, S.L.**
  **C/ Príncipe de Vergara 197, Oficina 1°A**
  **28002 Madrid (ES)**

(54) **METHOD FOR MAXIMISING THE PHASE SHIFT IN A BIMODAL PHOTONIC CRYSTAL GUIDE**

(57)    Method for maximising the phase shift between two propagation modes ($\beta1$, $\beta2$) of a light wave, of wavelength ($\lambda$), which is propagated through a photonic crystal structure (1) in the spatial direction in which the crystal exhibits periodicity, comprising the following steps
(a) obtaining the band diagram of the photonic crystal with periodic structure for the wave vectors (k) whose values are in the first Brillouin zone;
(b) selecting the propagation mode ($\beta_2$) of the wave ($\lambda$) in the periodic structure of the photonic crystal, wherein said mode has a slope P2 of wavelength ($\lambda$) with respect to the wave vector, of absolute value |P2|, working in slow wave regime;
(c) selecting a propagation mode ($\beta_1$) of said wave ($\lambda$), wherein said mode has a slope P1 of wavelength ($\lambda$) with respect to the wave vector, of absolute value |P1|, wherein |P1| is at least twice as large as |P2|; and
(d) causing said phase shift between the propagation modes ($\beta_1$, $\beta_2$) selected in steps (b) and (c) by propagating said wave ($\lambda$) through said photonic crystal waveguide (1), in the direction in which the crystal exhibits periodicity.

Figure 1

EP 4 235 291 A1

## Description

### Field of the invention

The present invention relates to the field of electromagnetism, in particular that of interferometry, wherein different modes of a same light wave which is propagated through a waveguide with periodic structure are interfered with.

### State of the art

In the field of nanophotonics, it is crucial to have optical interferometers that can, together with other photonic devices, be integrated in reduced-size chips, for the development of a large number of systems, such as optical communication networks, WDM filters, optical switches, optical modulators or analysis devices with application in various industrial sectors.

The main drawback to achieve an adequate miniaturisation of the current photonic interferometers is the need to have excessively long optical paths to achieve the necessary phase shifts in each application, which has a negative impact when it comes to their integration in chips. This is the case of the most used optical interferometers in the state of the art, Mach-Zehnder interferometers (MZI). In this type of MZI systems, the light is split into two independent optical paths and recombined at the output to create an interference pattern. The phase shift between the optical signals of both arms is achieved by introducing a change in the refractive index of one of said optical arms. However, the optical paths designed must be long enough to accumulate a considerable phase shift, thus making it impossible to reduce the final size of the photonic device in question. In addition to the aforementioned problems, these systems also have integration problems as they need additional photonic structures that are capable of separating the light in the two different optical arms and recombining it at its output.

Other solutions present in the state of the art to achieve suitable signal phase shifts in interferometer devices with reduced dimensions consist of the use of plasmonic materials or the use of complex designs, which translates into a great increase in the complexity of manufacturing processes and cost.

### Brief description of the invention

In this context, the solution proposed in the present invention is based on using a waveguide with a reduced-size periodic structure wherein the phase shift between two modes of the same light beam, which are propagated through said waveguide, is maximised.

The present invention relates to a method for maximising the phase shift between two propagation modes ($\beta_1$, $\beta_2$) of a light wave, of wavelength ($\lambda$), which is propagated through a photonic crystal structure (1), in the spatial direction in which the crystal exhibits periodicity comprising the following steps:

(a) obtaining the band diagram of the photonic crystal with periodic structure for the wave vectors (k) whose values are in the first Brillouin zone;

(b) selecting the propagation mode ($\beta_2$) of the wave ($\lambda$) in the periodic structure of the photonic crystal, wherein said mode has a slope P2 of wavelength ($\lambda$) with respect to the wave vector, of absolute value |P2|, working in slow wave regime;

(c) selecting a propagation mode ($\beta_1$) of said wave ($\lambda$), wherein said mode has a slope P1 of wavelength ($\lambda$) with respect to the wave vector, of absolute value |P1|, wherein |P1| is at least twice as large as |P2|; and

(d) causing said phase shift between the propagation modes ($\beta_1$, $\beta_2$) selected in steps (b) and (c) by propagating said wave ($\lambda$) through said photonic crystal waveguide (1), in the direction in which the crystal exhibits periodicity.

Furthermore, the present invention relates to a photonic crystal (1) which is a waveguide capable of performing the method for maximising a phase shift between two propagation modes ($\beta_1$, $\beta_2$) of the present invention. Additionally, the present invention relates to a photonic crystal for generating a difference in the group velocity between a propagation mode $\beta 1$ and a higher order propagation mode $\beta 2$, of a light beam of wavelength $\lambda$, which is propagated through said photonic crystal, wherein said photonic crystal comprises a single planar semiconductor layer, characterised in that said planar semiconductor layer comprises, in turn:

(i) a first input terminal of said light beam and a second output terminal of said beam,
(ii) a rotational axis of symmetry, z, aligned on an axis of propagation of said light,

(iii) a height h, measured on the y-axis, perpendicular to the z-axis,

(iv) a width measured on the x-axis, perpendicular to the y- and z-axes,

(v) the following sections aligned on the z-axis:

- a first section (5) comprising a first terminal and a second terminal, of length $t_1$, measured on the z-axis and width $w_{t1}$, measured on the x-axis, wherein the first terminal of said planar semiconductor layer is the first terminal of said first section,

- a third section (6) comprising a first terminal and a second terminal, of length ts, measured on the z-axis, and width $w_{t3}$, measured on the x-axis, wherein the second terminal of said planar semiconductor layer is the second terminal of said third section,

- a second section of periodic structure (7), comprising a first terminal and a second terminal, located between the second terminal of the first section and the first terminal of the third section, wherein the second section comprises N unit cells, wherein each cell (8) comprises:

  (a) a central part of length $w_i$, measured on the z-axis, and width $w_e$, measured on the x-axis, wherein said central part comprises an axis of rotational symmetry z', aligned with the z-axis; and
  (b) two wings extending from said central part on the z-axis, wherein each wing is of length $(a-w_i)/2$, measured on the z-axis, and width w, measured on the x-axis, and comprises an axis of rotational symmetry z', aligned with the z-axis,

where:

- N is an integer which is at least 50;
- h is a value selected within the range of between 100 and 1000 nm;
- $t_1$ is a value selected within the range of between 500 and 3000 nm;
- $t_3$ is a value selected within the range of between 500 and 3000 nm;
- $w_{t1}$ is a value selected within the range of between 1000 and 5000 nm;
- $w_{t3}$ is a value selected within the range of between 1000 and 5000 nm;
- $w_i$ is a value selected within the range between 50 and (a - 50) nm;
- $w_e$ is a value selected within the range between 1000 and 5000 nm;
- w is a value selected within the range between 300 and 1000 nm;
- a is a value selected within the range between 200 and 1000 nm; and
- $\lambda$ is a value less than 2000 nm.

Likewise, the present invention relates to an interferometer comprising the photonic crystal of the present invention.

Moreover, the present invention relates to the use of the photonic crystal of the present invention, or the photonic interferometric device of the present invention, as a photonic modulator, as a refractive index sensor for detecting changes in the raw index of a concentration of a compound between samples deposited on said photonic crystal or said interferometer, respectively, or as a chemical or biological substance detection sensor.

The present invention also relates to a method for detecting a variation in an optical property of an object or environment, using the photonic crystal of the present invention or the interferometer of the present invention, wherein said method comprises the following steps:

(i) measuring a parameter of the output light of the photonic crystal or interferometer, respectively, when light of a wavelength ($\lambda$) passes through said photonic crystal at a time $T_0$, when no variation in said property of said object or environment has occurred yet;

(ii) measuring a parameter of the output light of the photonic crystal or the interferometer, respectively, at a time T, when there has been a variation in said property of said object or environment;

(iii) determining whether there is a difference between the parameters of steps (i) and (ii) wherein, when any difference is determined, it is determined that a variation has occurred in said optical property of said object or environment.

**Description of the figures**

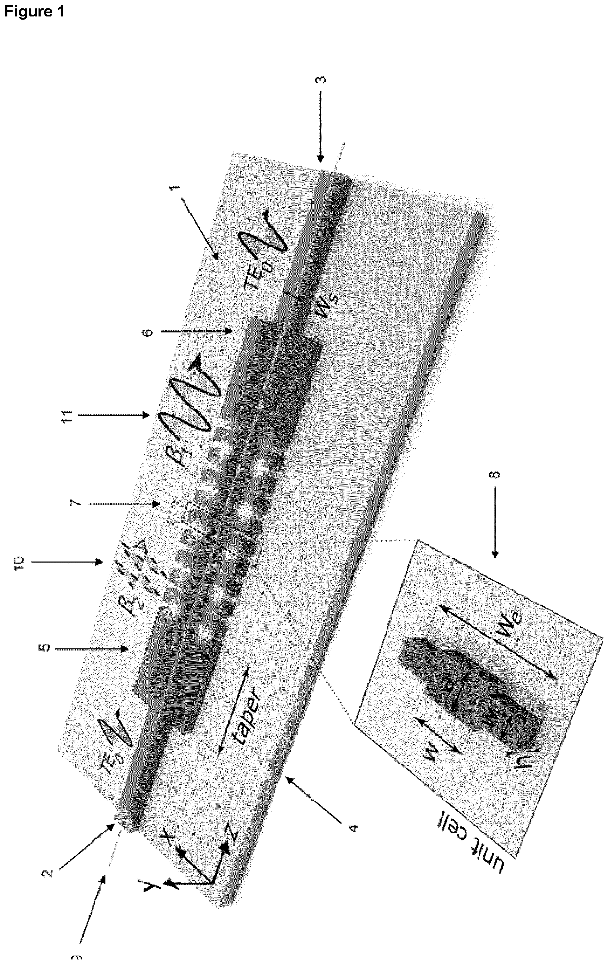

**Figure 1** shows a specific embodiment of the geometric shape of the interferometric device of the present invention comprising a photonic crystal (1) and a substrate (4). More specifically, the 3 parts that form the photonic crystal can be observed: a single-mode access guide (2), a periodic bimodal guide and a single-mode output guide (3), where the periodic bimodal guide comprises a first section (input taper, 5), a third section (output taper, 6) and a second section of periodic structure (7) that in turn comprises unit cells (8). In addition, the light beam (9), and the propagation modes $\beta 1$ (solid line) and $\beta 2$ (dotted line) of different orders are observed. Also represented in more detail are the dimensions of a unit cell repeated along the light propagation axis in the geometric structure which, in this embodiment, are a = 370 nm, width of the transverse element $w_i$ = 220 nm, length of the transverse element $w_e$ =1400 nm, width of the central guide w = 600 nm and height h = 220 nm, and single-mode guide width $w_s$ = 450 nm.

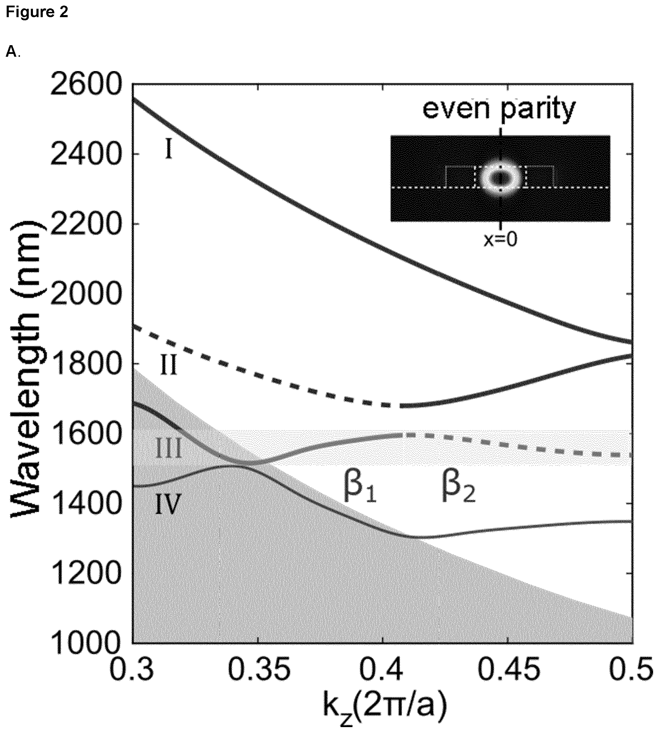

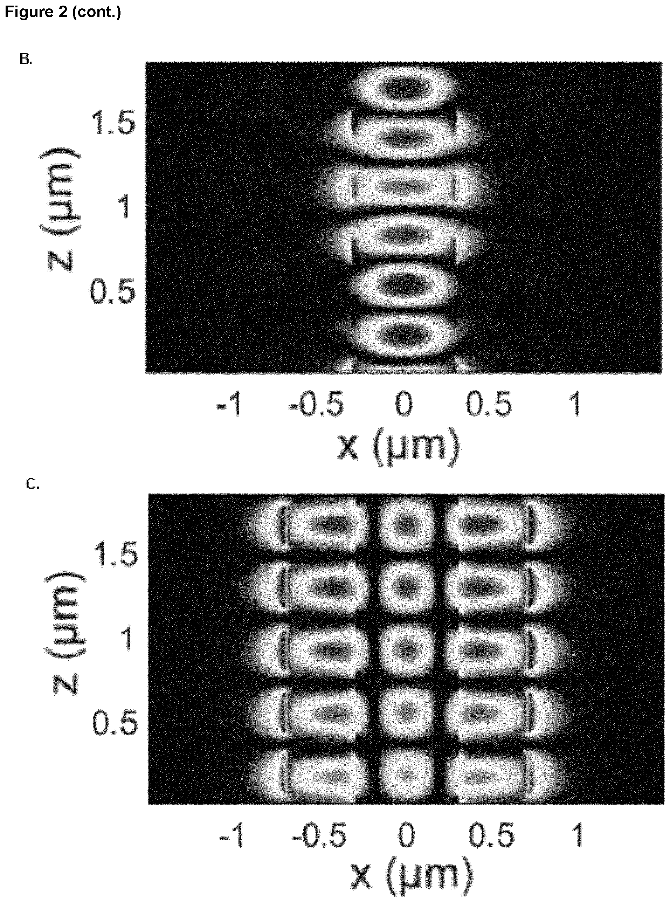

**Figure 2. A.** Band diagram of the one-dimensional bimodal photonic crystal structure with wavelength (nm, Y) as a function of wave vector ($k_z$) (X) for the first three even parity bands for transverse electric (TE) polarisation, where propagation mode $\beta 1$ is represented by the solid line, propagation mode $\beta 2$ is represented by the dotted line, the bimodal zone is represented by shaded region (III), and the light taper is represented by shaded region (IV). B. Actual part of the x component of the electric field for the fundamental mode ($\beta 1$) in the xz plane for y = 0. C. Actual part of the x component of the electric field for the higher order mode ($\beta 2$) in the xz plane for y = 0. The field patterns are calculated in the third band for $k_x$ = 0.365 $2\pi/a$ and $k_x$ = 0.475 $2\pi/a$.

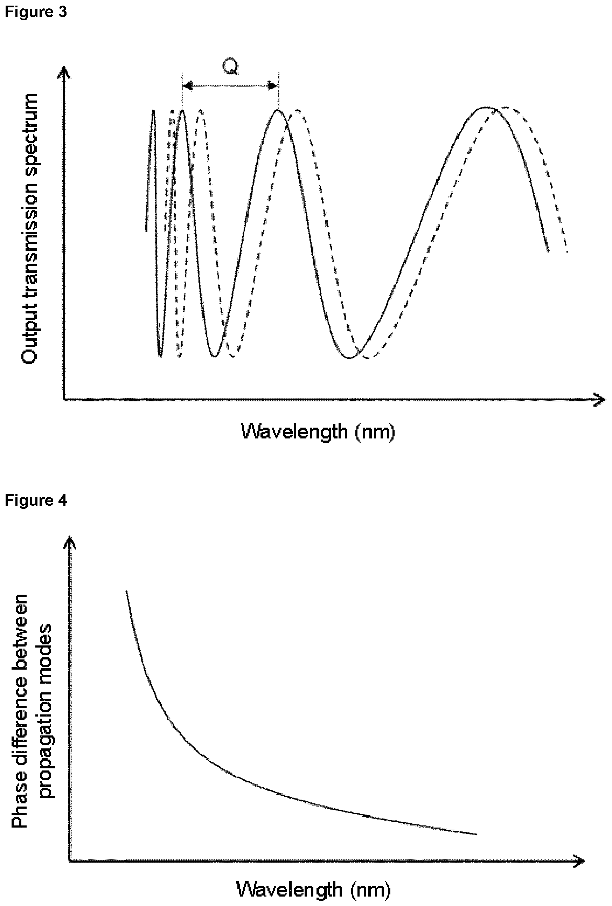

**Figure 3** schematically shows the device operation. Specifically, the transmission spectrum (Y) is shown in a solid line in a linear scale as a function of the wavelength (X). The dotted line represents the shifted transmission spectrum when the optical properties of the environment are varied. In the spectrum, a sine shape is observed as a consequence of the modal interferences produced at the output of the interferometer, the separation between these interferences (whether constructive or destructive) being the free spectral range (Q). The most clustered modal interferences for low wavelengths have been depicted, due to a slow wave behaviour of the periodic guide in this wavelength range.

**Figure 4** shows the difference of phase shifts of the modes (Y) against the wavelength (X) between two different events by varying the optical properties of the device. It can be seen how the phase shift increases considerably for those low wavelengths where the slow wave phenomenon occurs.

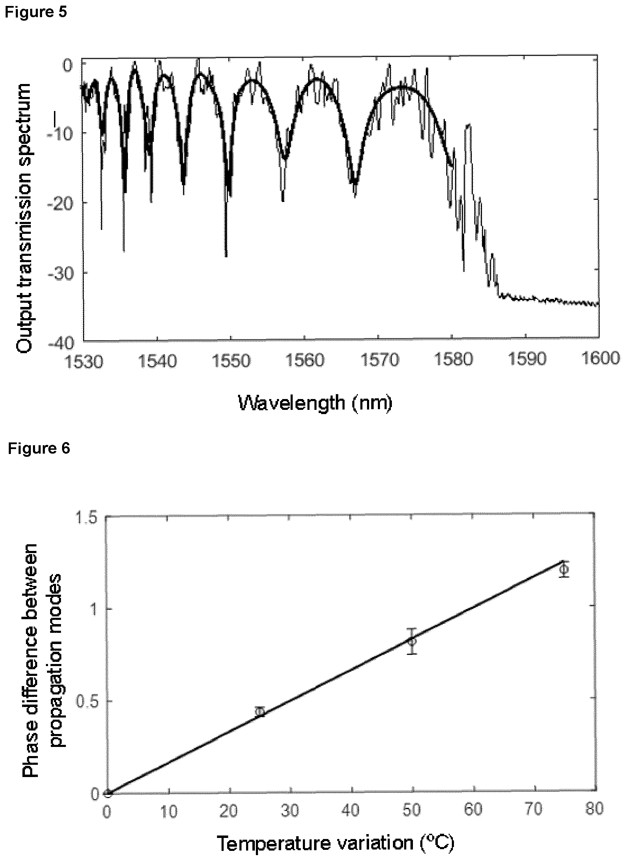

**Figure 5** shows a graph representing the normalised transmission spectrum (Y) on a logarithmic scale against the wavelength (X), obtained experimentally with the design shown in Figure 1. It is observed how the modal interferences are grouped at low wavelengths due to the appearance of the slow-wave phenomenon.

**Figure 6** shows a graph representing the phase shift difference of the modes (Y), against temperature variations in the device (X) for a modal interference located in the slow-wave zone. Specifically, increases of 25, 50 and 75 °C have been considered, starting from an initial situation of 25 °C.

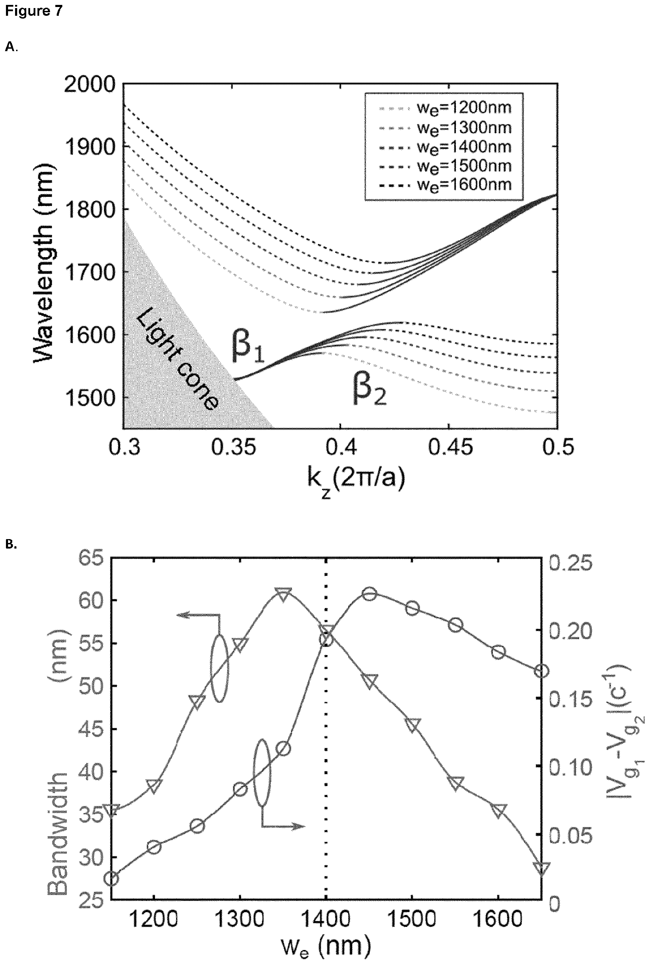

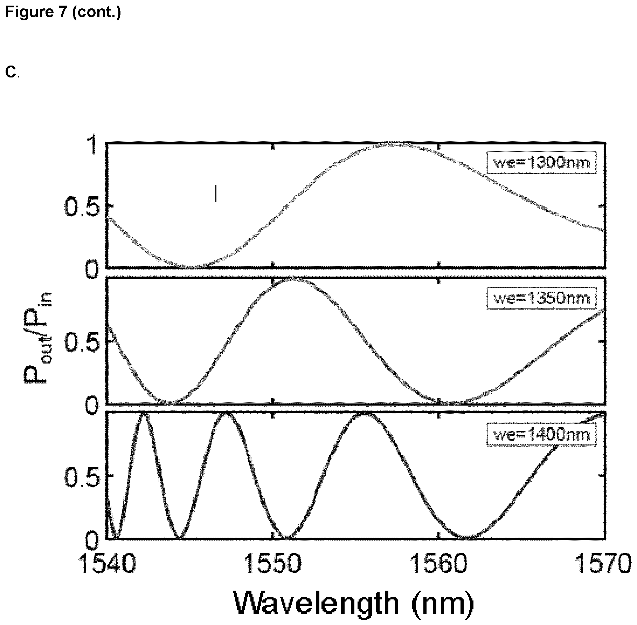

**Figure 7. A.** Second and third bands for different lengths of transverse elements $w_e$ (the rest of the design parameters are the same detailed in the exemplified embodiment). The contributions of the fundamental ($\beta 1$) and higher order ($\beta 2$) mode to banding in the bimodal region are shown in solid line and dotted line, respectively. **B.** Compromise between the group velocity difference between both modes [$|Vg_1 - Vg_2|$ ($c^{-1}$), circular points] and the bimodal bandwidth (nm, triangular points), as a function of different values $w_e$. The group velocity difference has been calculated for those wavelengths at the lower edge of the bimodal ROI (Region Of Interest) where a slow light behaviour is obtained for the higher order. C. Ratio between output and input power calculated as a cosine squared of the phase shift as a function of wavelength. Various $w_e$ lengths are considered, which represent the evolution of the interference pattern as a result of the slow behaviour of light.

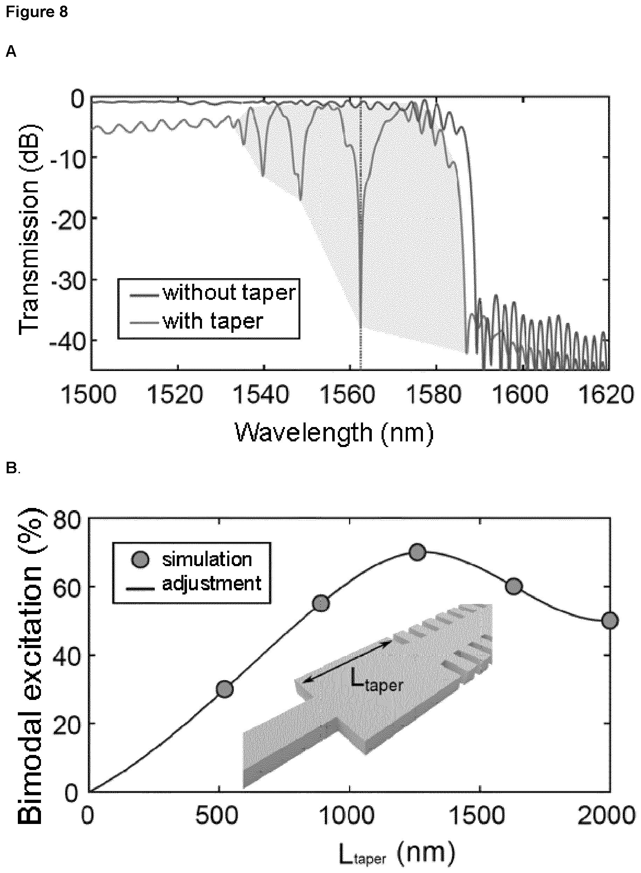

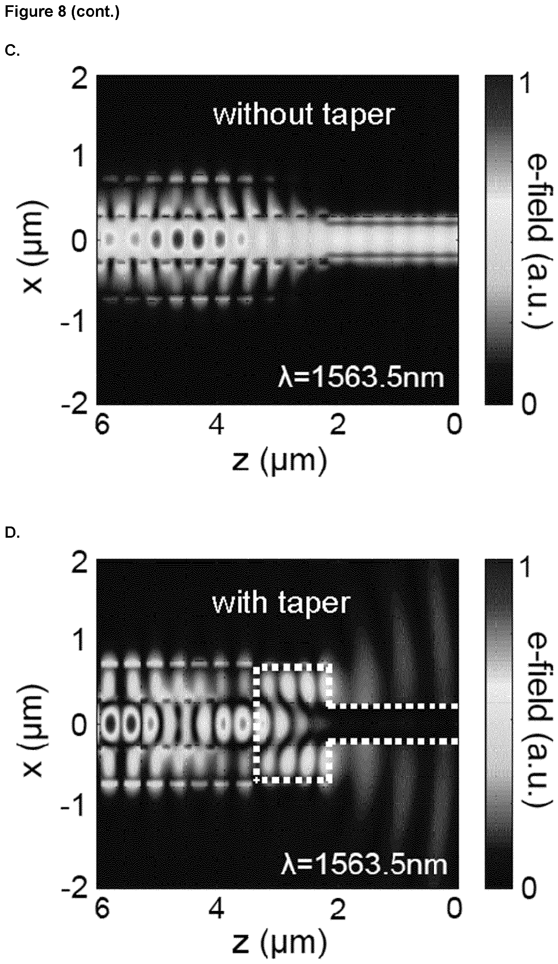

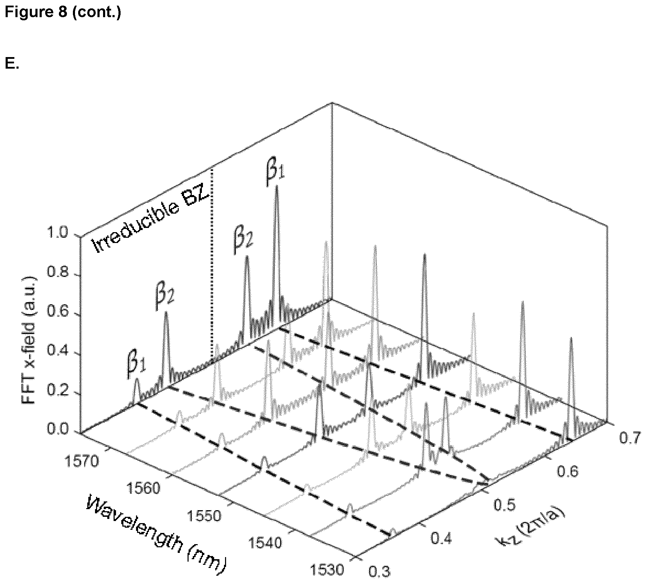

**Figure 8. A.** Transmission spectra for an embodiment of the bimodal photonic crystal interferometer exemplified in the description, without and with a rectangular taper of 1200 nm with the design parameters detailed above and for N = 150 unit cells repeated along the z-axis. The shaded area represents the region of interest of the interferometer, corresponding to the bimodal region near the PBG. **B.** Modal excitation obtained from the amplitude difference between a constructive and a destructive interference in the spectrum for different taper lengths. The box details the value considered in a 3D sketch. **C.** Absolute value of the electric field (e-field) for the xz plane and y = 0 at the output interface between the bimodal periodic part and the single-mode waveguide without a rectangular taper between interfaces. **D.** Absolute value of the electric field (e-field) for the xz plane and y = 0 at the output interface between the bimodal periodic part and the single-mode waveguide with a rectangular taper between interfaces. E. FFT (Fast Fourier Transform) amplitude of the x component of the electric field (FFT x-field, a.u.) along the direction of propagation z ($k_z$, $2\pi/a$) for different wavelengths (nm) in the bimodal region. The dashed lines with more spacing from each other and the central dashed lines in the wavelength plane k-$_z$ represent the dispersion ratios of the fundamental and higher order mode, respectively. The irreducible zone and the second Brillouin zone are shown.

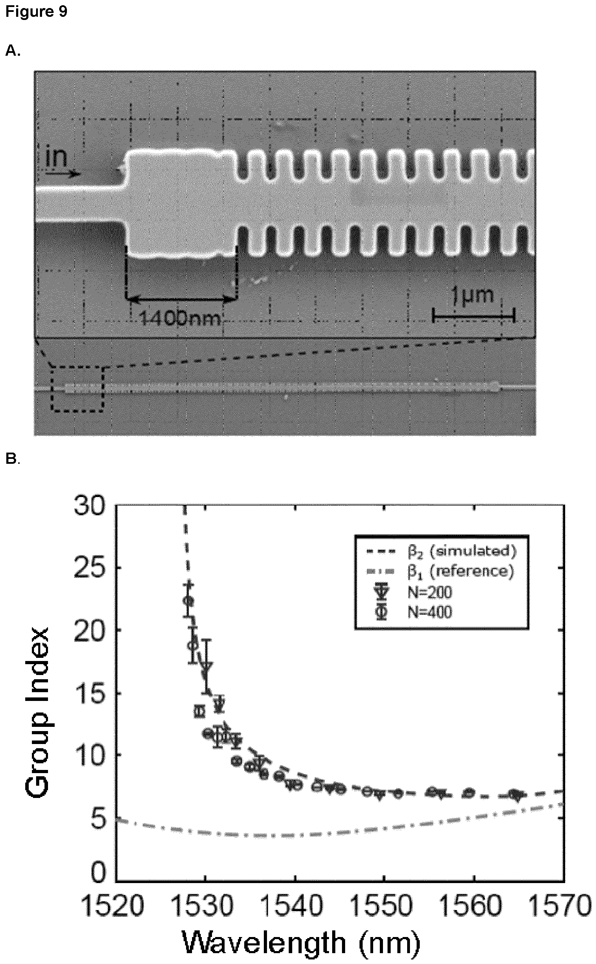

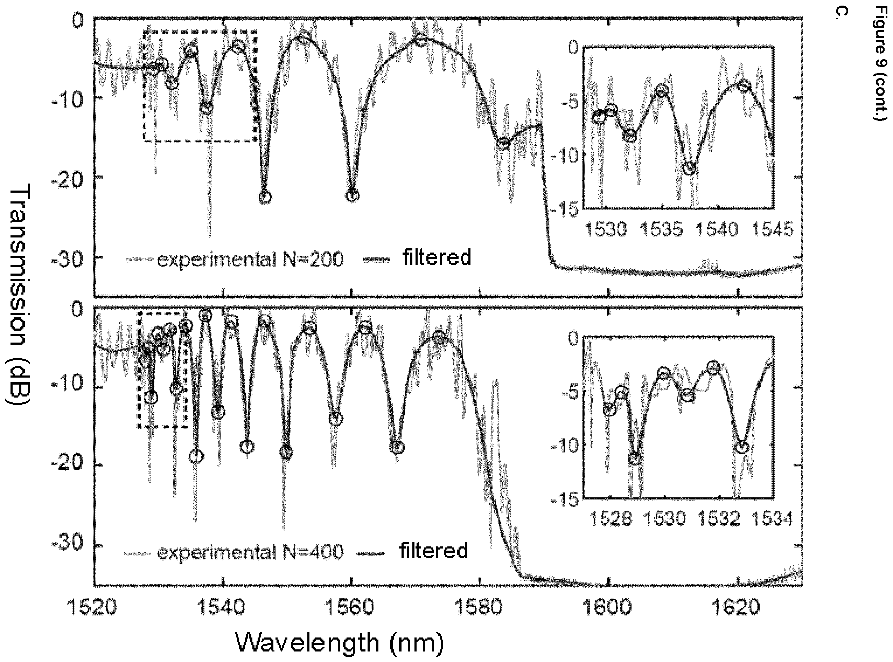

**Figure 9. A.** Scanning electron microscope (SEM) image of the silicon structures manufactured without a silica coating layer. A detailed image of the interface between the single-mode and bimodal sections is shown with the presence of a manufactured rectangular taper of ~ 1400 nm in length. **B.** Experimentally obtained group index using an embodiment of the photonic crystal of the present invention where N = 200 (triangular data points) and where N = 400 (circular data points) under a silica coating from the maximum and minimum interference points and the simulated fundamental mode group index as a reference. Three different experimental measurements have been performed to obtain the error bars represented as the standard deviation of the data. The dashed line represents the theoretical results obtained from the band diagram simulations, which has shifted only 5 nm towards lower wavelengths to compensate for slight manufacturing deviations. **C.** Normalised transmitted spectra using an embodiment of the photonic crystal of the present invention where N = 200 (upper spectrum) or where N = 400 (lower spectrum) under a silica coating. The spectra have been normalised with respect to a uniform reference waveguide measured under the same environmental conditions. The raw experimental data is represented in grey, while the dark lines refer to the filtered signal without the Fabry-Perot ripple created in the cavities of the photonic circuit. Constructive and destructive interference are marked with black circles. The boxes represent an enlarged view of the transmission spectrum in the slow light region.

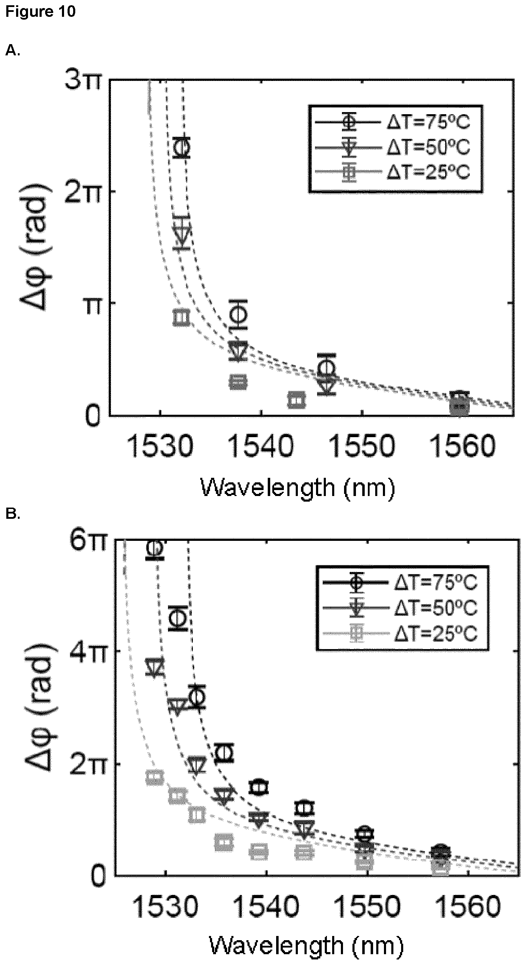

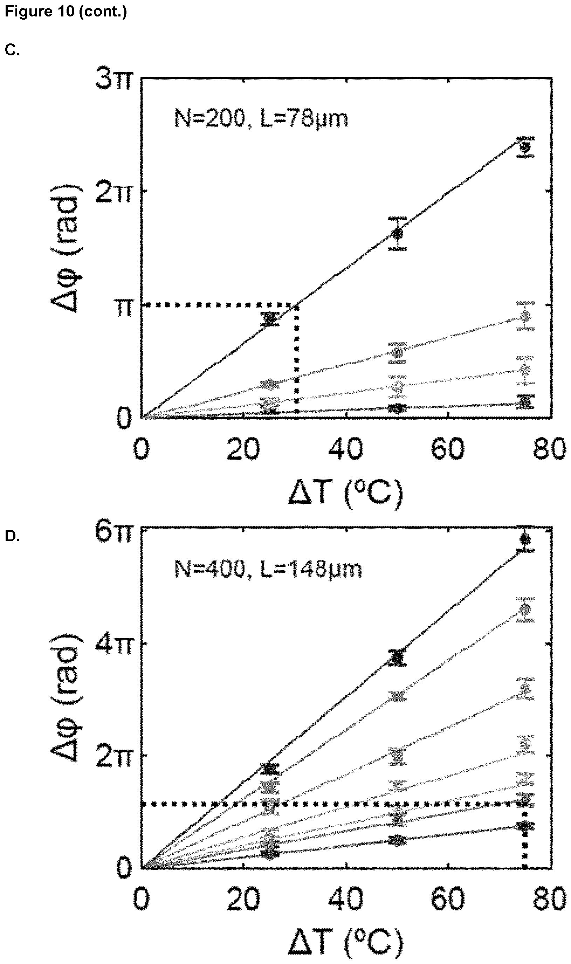

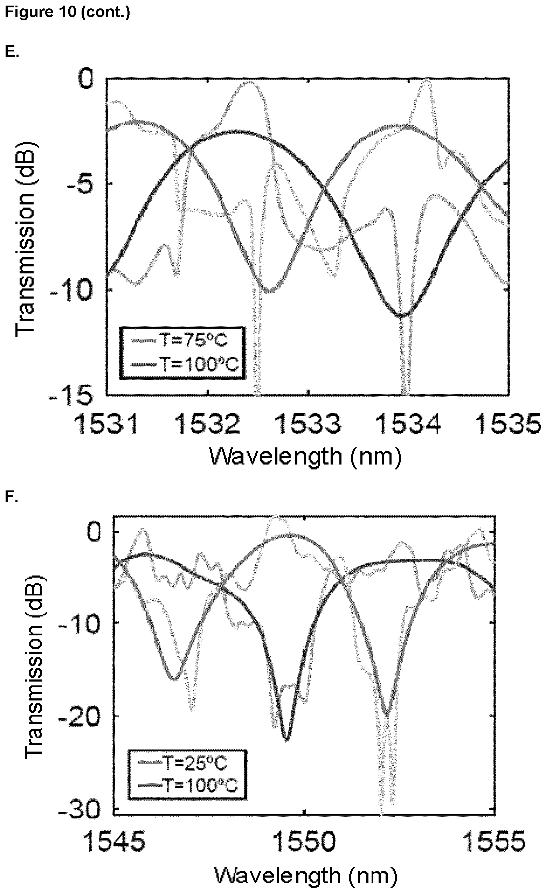

**Figure 10. A.** Experimental phase shift as a function of wavelength obtained using an interferometer comprising an embodiment of the 1D bimodal photonic crystal where N = 200 for different temperature increases (25°C, 50°C and 75°C, represented by square, triangular and circular data points, respectively). The dashed lines represent the results of the simulation of the band diagram, shifted by 5 nm as in the previous case. **B.** Experimental phase shift as a function of wavelength obtained using an interferometer comprising a 1D bimodal photonic crystal embodiment where N = 400 for different temperature increases (25°C, 50°C and 75°C, represented by square, triangular and circular data points, respectively). The dashed lines represent the results of the simulation of the band diagram, shifted by 5 nm as in the previous case. **C.** Evolution of the measured phase shift for a linear increase in the interferometer temperature comprising an embodiment of the photonic crystal with N = 200, wherein different minimum interference wavelengths are shown at 1559.68 nm, 1546.51 nm, 1537.76 nm and 1532.13 nm, representing the increase of the phase sensitivity of the lower line towards the upper line, respectively. Five different experimental measurements have been performed to obtain the represented error bars. **D.** Evolution of the measured phase shift for a linear increase in interferometer temperature comprising an embodiment of the photonic crystal with N = 400, wherein different minimum interference wavelengths are shown at 1557.24 nm, 1549.73 nm, 1543.73 nm, 1539.23 nm, 1535.75 nm, 1533.08 nm, 1530.54 nm and 1528.95 nm, representing the increase in phase sensitivity of the lower line towards the upper line, respectively. Five different experimental measurements have been performed to obtain the represented error bars. **E.** Detail of the normalised transmission spectrum for an interferometer comprising an embodiment of the photonic crystal with N = 200 (a 1D bimodal photonic crystal length of 74 $\mu$m) working in the slow light region for a temperature change of 25°C, corresponding to an accumulated phase change of 0.9$\pi$. The raw and filtered data are represented with light and dark lines, respectively. **F.** Detail of the normalised transmission spectrum for a configuration N = 400 (a 1D bimodal photonic crystal length of 148 $\mu$m) working in the normal light region for a temperature change of 75 °C, corresponding to an accumulated phase change of $\pi$. The raw and filtered data are represented with light and dark lines, respectively.

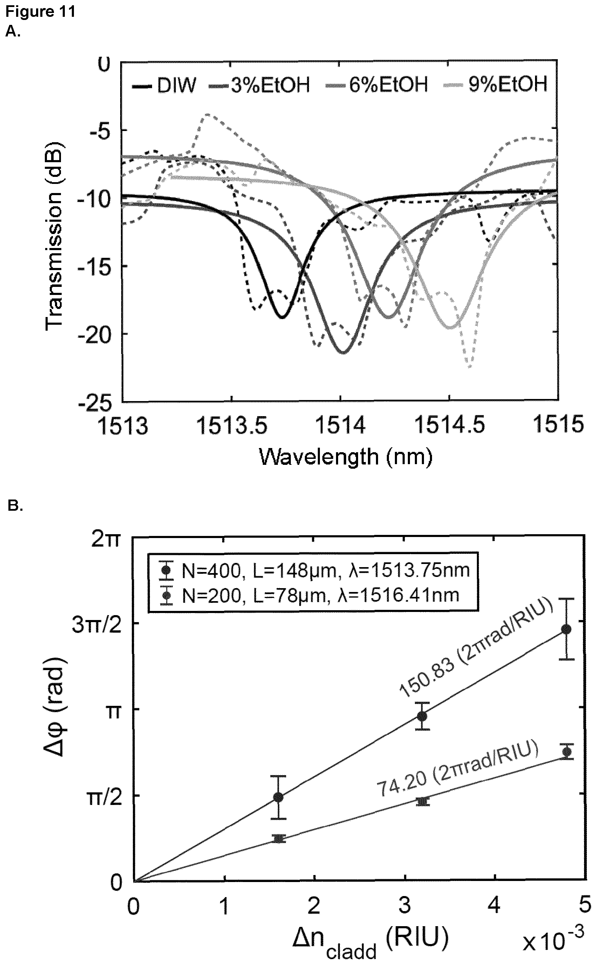

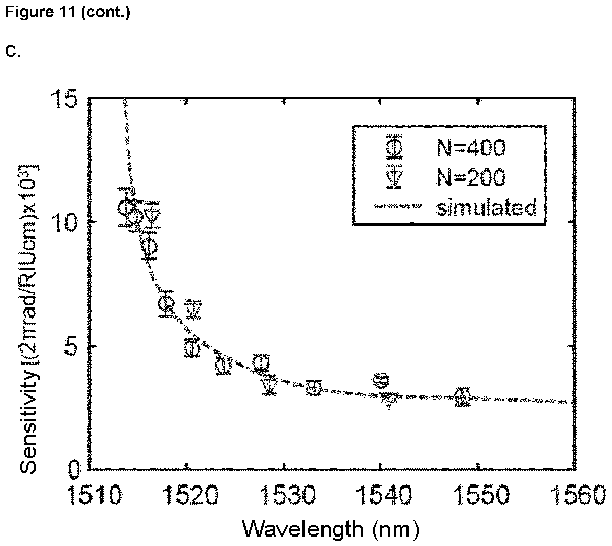

**Figure 11. A.** Normalised experimental spectra obtained for an interferometer comprising an embodiment of the photonic crystal with the configuration N = 400 manufactured without a silica cover layer when the structure is covered with different solutions of ethanol (EtOH) in deionised water (DIW). The raw data is represented in dashed lines, while the Lorentzian fit used to determine the minimum positions is represented in solid lines. **B.** Phase displacement measurements for an interferometer comprising embodiments of the photonic crystal with configurations N = 200 (line with lower slope) and N = 400 (line with upper slope) as a function of linear increases in the refractive index of the coating. **C.** Sensitivity to variations of the refractive index obtained experimentally in units of phase shift (2$\pi$rad/RIUcm $\times$ 10$^3$) against the wavelength (nm) for an interferometer comprising 1D bimodal photonic crystal embodiments with N = 200 (triangular points) and N = 400 (circular points) as the slope of the linear adjustment for different changes in the refractive index of the coating. These values are scaled to a length of 1 cm to compare the results with the literature. The dotted line represents the simulated sensitivity curve obtained from the theoretical band structures under similar conditions. The sensor's sensitivity is higher for wavelengths where a slow-wave phenomenon occurs.

**Detailed Description**

The present invention relates to a method for maximising the phase shift between two propagation modes ($\beta1$, $\beta2$) of a light wave, of wavelength ($\lambda$), which is propagated through a photonic crystal waveguide (1), in the spatial direction in which said crystal exhibits periodicity. Furthermore, the present invention relates to a photonic crystal (1) which is a waveguide capable of carrying out said method. Likewise, the present invention relates to an interferometer comprising said photonic crystal.

Said method is a method for maximising the phase shift between two propagation modes ($\beta1$, $\beta2$) of a light wave, of wavelength ($\lambda$), which is propagated through a photonic crystal waveguide (1) in the spatial direction in which said crystal exhibits periodicity. Said light is preferably a laser beam with a wavelength of less than 2000 nm, more preferably between 1000 and 2000 nm, still more preferably between 1250 and 1750 nm, even more preferably between 1465 and 1650 nm, much more preferably between 1520 and 1580 nm or especially more preferably between 1530 and 1570 nm.

Said modes are two different modes of all possible modes to be excited by the photonic crystal, where preferably propagation mode $\beta1$ is a lower order mode and propagation mode $\beta2$ is a higher order mode. Said modes are most preferably transverse modes chosen from TE (transverse electric) modes, TM (transverse magnetic) modes, TEM (transverse electromagnetic) modes and hybrid modes where there are components of the electric and magnetic field in the propagation direction. In a more preferred embodiment of the present invention, said modes $\beta1$ and $\beta2$ are TE modes. More preferably, propagation mode $\beta1$ is the fundamental mode and propagation mode $\beta2$ is a higher order mode. Even more preferably, said modes are of the same parity and polarisation.

Said phase shift is conditioned by differences in the group velocity of each mode due to dispersive behaviours. Thus, by maximising the difference between the group velocities of the propagation modes ($\beta1$, $\beta2$), this phase shift between the propagation modes ($\beta1$, $\beta2$) is maximised. Thus, the group velocity of one propagation mode is less than the group velocity of the other propagation mode. The group velocity is defined as the derivative of the angular frequency with respect to the wave vector, i.e. the slope of the bands obtained in the band diagram. Hence, the photonic crystal will produce certain folds in the bands and:

(i) the higher order mode ($\beta2$) is selected from all the wave propagation modes ($\lambda$) in the periodic structure of the photonic crystal, wherein said mode has a slope P2 of wavelength ($\lambda$) with respect to the wave vector, of absolute value |P2| in the slow wave regime; and, on the other hand,

(i) the lowest order mode ($\beta1$) is selected from all the wave propagation modes ($\lambda$) in the periodic structure of the photonic crystal, wherein said mode has a slope P1 of wavelength ($\lambda$) with respect to the wave vector, of absolute value |P1|, wherein |P1| is at least twice as large as |P2|.

Thus, in a preferred embodiment of the present invention, the group velocity of propagation mode $\beta_2$ is less than the group velocity of propagation mode $\beta_1$.

The light modes that propagate in a slow wave regime have a group velocity close to zero, as a consequence of the multiple reflections they experience in the elements of the waveguide with periodic structure. Selecting a slow wave mode of propagation versus another mode that propagates in a normal dispersive wave regime [the mode will have a slope that is at least twice that of the slow wave propagation mode ($\beta_2$)], as the fundamental light mode, which is propagated along the central axis of the periodic structure of the guide, allows maximising the working phase shift without the need to use large optical paths. This effect is identified in the third band itself (see Figure 2A) when propagation mode $\beta1$ is the fundamental mode and propagation mode $\beta2$ is a higher order mode, where for low wavelengths within the bimodal zone, the higher order mode undergoes highly dispersive behaviour, thus drastically reducing its group velocity in comparison with the fundamental mode. Hence, in the range of wavelengths comprising the third band, two completely differentiated modes are obtained, orthogonal to one other and with different field distributions. In particular, the fundamental mode is almost completely confined to the central guide of the periodic structure, while the higher order mode extends towards the transverse elements of the photonic crystal. Due to this, there is a dispersive effect on the higher order mode, which means that its group velocity will be reduced for those wavelengths where the slope of the band reaches values close to zero.

Thus, said method comprises the following steps:

(a) obtaining the band diagram of the photonic crystal with periodic structure for the wave vectors (k) whose values are in the first Brillouin zone;

(b) selecting the propagation mode ($\beta2$) of the wave ($\lambda$) in the periodic structure of the photonic crystal, wherein said mode has a slope P2 of wavelength ($\lambda$) with respect to the wave vector, of absolute value |P2|, working in slow wave regime;

(c) selecting a propagation mode ($\beta1$) of said wave ($\lambda$), wherein said mode has a slope P1 of wavelength ($\lambda$) with

respect to the wave vector, of absolute value |P1|, wherein |P1| is at least twice as large as |P2|; and
(d) causing said phase shift between the propagation modes ($\beta1$, $\beta2$) selected in steps (b) and (c) by propagating said wave ($\lambda$) through said photonic crystal waveguide (1), in the direction in which the crystal exhibits periodicity.

In a preferred embodiment, the absolute value |P1| of the slope of the propagation mode ($\beta1$) is at least 4 times higher than the absolute value |P2| of the slope of the propagation mode ($\beta_2$), more preferably at least 10 times higher than the absolute value |P2| of the slope of the propagation mode ($\beta_2$), still more preferably at least 100 times higher than the absolute value |P2| of the slope of the propagation mode ($\beta_2$), yet more preferably at least 1000 times higher than the absolute value |P2| of the slope of the propagation mode ($\beta_2$).

In an alternative embodiment, said method comprises the following steps:

(a) obtaining the band diagram of the photonic crystal with periodic structure for the wave vectors (k) whose values are in the first Brillouin zone;

(b) selecting the propagation mode ($\beta2$) of the wave ($\lambda$) in the periodic structure of the photonic crystal, where said mode has a slope close to zero or the closest to zero, from among all the propagation modes of the wave ($\lambda$);

(c) selecting a propagation mode ($\beta1$) of said wave ($\lambda$), having a high positive slope or the highest positive slope among all the propagation modes of the wave ($\lambda$); and

(d) causing said phase shift between the propagation modes ($\beta1$, $\beta2$) selected in steps (b) and (c) by propagating said wave ($\lambda$) through said photonic crystal waveguide (1), in the direction in which the crystal exhibits periodicity.

Said photonic crystal (1) is a waveguide capable of performing the methods of the present invention. Said crystal exhibits periodicity in at least one spatial direction. In a preferred embodiment of the present invention, said photonic crystal may have one-dimensional, two-dimensional or three-dimensional periodicity, i.e. said photonic crystal may show periodicity in one, two or three directions, respectively.

Said photonic crystal may be of any material and comprise any characteristic or dimension to show said periodicity. The adaptability of the proposed design to periodic structures in one, two or three dimensions and to other materials and to other frequencies of the electromagnetic spectrum, allows the scalability of the periodic structures presented in said photonic crystal.

Preferably, said photonic crystal is of silicon, silicon oxide (silica), titanium oxide, or a polymer. In a preferred embodiment of the present invention, said photonic crystal is silicon or doped silicon. More preferably, said photonic crystal is silicon or doped silicon comprising at least one element selected from phosphorus, arsenic, antimony, bismuth, lithium, boron, aluminium, gallium, indium, germanium, nitrogen, or a metal such as gold, platinum or copper. In a preferred embodiment, said photonic crystal is silicon or doped silicon, wherein the doped silicon comprises N-type, P-type or another type of doped silicon, wherein N-type doped silicon comprises silicon doped with at least one element selected from phosphorus, arsenic, antimony, bismuth and lithium, P-type doped silicon comprises silicon doped with at least one element selected from boron, aluminium, gallium and indium.

In a preferred embodiment of the present invention, the photonic crystal comprises one single-mode input and another output guide. Said single-mode guides preferably have a width measured on the x-axis, perpendicular to the y- and z-axes, of $w_s$, where $w_s$ is less than $w_e$. In a preferred embodiment of the present invention, the photonic crystal is for generating a difference in group velocity between a propagation mode $\beta1$ and a higher order propagation mode $\beta2$, of a light beam of wavelength $\lambda$, which is propagated through said photonic crystal, wherein said photonic crystal comprises a single planar semiconductor layer, characterised in that said planar semiconductor layer comprises:

(i) a first input terminal of said light beam and a second output terminal of said beam,
(ii) a rotational axis of symmetry, z, aligned on an axis of propagation of said light,
(iii) a height h, measured on the y-axis, perpendicular to the z-axis,
(iv) a width measured on the x-axis, perpendicular to the y- and z-axes,
(v) the following sections aligned on the z-axis:

- a first section (5) comprising a first terminal and a second terminal, of length $t_1$, measured on the z-axis and width $w_{t1}$, measured on the x-axis, wherein the first terminal of said planar semiconductor layer is the first terminal of said first section,
- a third section (6) comprising a first terminal and a second terminal, of length ts, measured on the z-axis, and width $w_{t3}$, measured on the x-axis, wherein the second terminal of said planar semiconductor layer is the second terminal of said third section,

- a second section of periodic structure (7), comprising a first terminal and a second terminal, located between the second terminal of the first section and the first terminal of the third section, wherein the second section comprises N unit cells, wherein each cell (8) comprises:

(a) a central part of length $w_i$, measured on the z-axis, and width $w_e$, measured on the x-axis, wherein said central part comprises an axis of rotational symmetry z', aligned with the z-axis; and
(b) two wings extending from said central part on the z-axis, wherein each wing is of length $(a-w_i)/2$, measured on the z-axis, and width w, measured on the x-axis, and comprises an axis of rotational symmetry z', aligned with the z-axis,

where:

- N is an integer which is at least 50;
- h is a value selected within the range of between 100 and 1000 nm;
- $t_1$ is a value selected within the range of between 500 and 3000 nm;
- $t_3$ is a value selected within the range of between 500 and 3000 nm;
- $w_{t1}$ is a value selected within the range of between 1000 and 5000 nm;
- $w_{t3}$ is a value selected within the range of between 1000 and 5000 nm;
- $w_i$ is a value selected within the range between 50 and (a - 50) nm;
- $w_e$ is a value selected within the range between 1000 and 5000 nm;
- w is a value selected within the range between 300 and 1000 nm;
- a is a value selected within the range between 200 and 1000 nm; and
- $\lambda$ is a value less than 2000 nm.

Thus, in other words, the second section of periodic structure (7) comprises N unit cells and N+1 spacers, where each cell comprises a central part of length $w_i$, measured on the z-axis, and width $w_e$, measured on the x-axis, where said central part comprises an axis of rotational symmetry z', aligned with the z-axis, and each cell is separated from the adjacent cell and/or from the second terminal of the first section or from the first terminal of the third section by a spacer, where each spacer is of length $(a-w_i)$, measured on the z-axis, and width w, measured on the x-axis, and comprises an axis of rotational symmetry z', aligned with the z-axis.

Thus, in this preferred embodiment, the first section (5) is a taper and the third section (6) is another taper, and the second section is the part of the guide comprising the periodic structure (7) formed by the unit cells (8). Said three sections are parts of the same crystal. Likewise, each unit cell of the periodic structure (7) are parts of the same crystal, and the central part and the two wings of each unit cell are also parts of the same crystal, said photonic crystal being a single crystal.

Preferably, the number N of unit cells of the second section (2), is an integer N which is at least 100, more preferably selected within the range between 100 and 100000, still more preferably between 100 and 10000, even more preferably between 150 and 5000. In an even more preferred embodiment of the present invention, the number N of unit cells of the second section (2), is an integer selected within the range between 200 and 400.

In one embodiment of the present invention, h is a value selected within the range of between 100 and 1000 nm. Preferably, h is a value selected within the range of between 150 and 500 nm, more preferably between 200 and 300 nm, still more preferably between 200 and 250 nm.

In one embodiment of the present invention, $t_1$ is a value selected within the range of between 500 and 3000 nm and $t_3$ is a value selected within the range of between 500 and 3000 nm. Preferably, $t_1$ and $t_3$ are values independently selected within the range of between 1000 and 1600 nm, more preferably between 900 and 1500 nm, still more preferably between 1200 and 1400 nm.

In one embodiment of the present invention, $w_{t1}$ is a value selected within the range of between 1000 and 5000 nm, $w_{t3}$ is a value selected within the range of between 1000 and 5000 nm, and $w_e$ is a value selected within the range of between 1000 and 5000 nm. Preferably, $w_{t1}$, $w_{t3}$ and $w_e$ are values independently selected within the range of between 1300 and 1500 nm, more preferably between 1350 and 1450 nm, still more preferably between 1375 and 1425 nm.

In one embodiment of the present invention, $w_i$ s a value selected within the range between 50 and (a-50) nm. Preferably, $w_i$ is a value selected within the range of between 100 and 900 nm, more preferably between 200 and 300 nm, still more preferably between 200 and 250 nm.

In one embodiment of the present invention, w is a value selected within the range between 300 and 1000 nm. Preferably, w is a value selected within the range of between 400 and 750 nm, more preferably between 500 and 700 nm, still more preferably between 550 and 650 nm.

In one embodiment of the present invention, a is a value selected within the range between 200 and 1000 nm. Preferably, a is a value selected within the range of between 300 and 750 nm, more preferably between 350 and 400 nm, still more preferably between 360 and 390 nm.

Preferably, said photonic crystal comprises a single planar semiconductor layer deposited on a planar insulator layer. More preferably said insulator is silica or a non-conductive polymer.

In an even more preferred embodiment of the photonic crystal of the present invention:

- the semiconductor is silicon;
- the insulator is made of silica,
- N is an integer which is at least 100;
- h is a value selected within the range of between 200 and 250 nm;
- $t_1$ and $t_3$ are independently selected values within the range of between 1000 and 1600 nm;
- $w_i$ is a value selected within the range between 200 and 250 nm;
- $w_e$, $w_{t1}$ and $w_{t3}$ are independently selected values within the range between 1300 and 1500 nm;
- w is a value selected within the range between 500 and 700 nm;
- a is a value selected within the range between 350 and 400 nm; and
- $\lambda$ is a value selected within the range between 1300 and 1600 nm

In an even more preferred embodiment of the photonic crystal of the present invention:

- the semiconductor is silicon;
- the insulator is made of silica,
- N is an integer selected from the range of between 200 and 10000;
- h is a value selected within the range of between 200 and 250 nm;
- $t_1$ and $t_3$ are independently selected values within the range of between 1200 and 1400 nm;
- $w_i$ is a value selected within the range between 200 and 250 nm;
- $w_e$, $w_{t1}$ and $w_{t3}$ are independently selected values within the range between 1350 and 1450 nm;
- w is a value selected within the range between 500 and 700 nm;
- a is a value selected within the range between 350 and 400 nm; and
- $\lambda$ is a value selected within the range between 1530 and 1570 nm.

In the embodiments exemplified herein, in the photonic crystal:

- the semiconductor is silicon;
- the insulator is made of silica,
- N is an integer selected from the range of between 200 and 400;
- h is 220 nm;
- $t_1$ and $t_3$ are values selected within the range of between 1200 and 1400 nm;
- $w_i$ is 220 nm;
- $w_e$, $w_{t1}$ and $w_{t3}$ are 1400 nm;
- w is 600 nm;
- a is 370 nm; and
- $\lambda$ is a value selected within the range between 1530 and 1570 nm.

In one exemplified embodiment, where N is 200 the photonic crystal has a length of 78 $\mu$m, and in another where N is 400, the photonic crystal has a length of 148 $\mu$m.

Thus, an exemplified embodiment of the photonic crystal is based on a photonic structure created in silicon, on a silicon oxide substrate consisting of one single-mode input and another output guide, and of the bimodal periodic structure, Figure 1. The input guide, which supports the fundamental mode of light with transverse electric (TE) polarisation, is responsible for exciting and transmitting its power to the two propagating modes through the one-dimensional periodic structure, the fundamental mode and the higher order mode, both of even parity. In turn, the two modes propagated by the periodic guide will be responsible for exciting the fundamental mode of the single-mode guide at the output, whose power will depend on the phase shift produced between the two modes along the periodic structure. This one-dimensional periodic structure is composed of the repetition of a basic unit cell along the light propagation axis, and of a small homogeneous guide transition between the single-mode guides and the bimodal periodic structure. The design parameters are the periodicity a, the width of the transverse element $w_i$, the length of the transverse element $w_e$, the width of the central guide w and the height h, and with a width for the inlet and outlet guides $w_s$.

Since it is a periodic structure, the band diagrams of the unit cell must be calculated in order to know the behaviour of the propagating modes. Only the modes of the polarisation considered (in this implementation they are considered TE), which are those that will be excited by the arranged input guides, will be computed and taken into account. Specifically, the first band is composed of the first fundamental mode, while the second and third bands are a mixture of the first fundamental mode with the higher order mode. In the band diagram, the presence of photonic band-gaps is also obtained, which are those regions in wavelength or frequency where light is not transmitted and this is totally reflected or radiated. The second and third bands originate by having an intersection of the first fundamental light mode folded in the irreducible Brillouin zone with the second higher order light mode. In periodic structure theory, two modes of the same parity and polarisation cannot intersect and instead the bands repel, forming a fold around this point. In this way, two bimodal regimes are obtained in the second and third bands formed by the fundamental mode and the higher order mode. In the theoretical framework of the present invention, the study focused on the third band which is the one that has a dispersive behaviour for the higher order mode.

Thus, a unit cell has been designed with a bimodal region where actually reduced group velocities are produced for the higher order mode, thus maximising the effect and sensitivity of the interferometer. The transmission spectrum contains more clustered interferences for those wavelengths where the higher order mode behaves highly dispersively, as opposed to what occurs for higher wavelengths where the higher order mode is not as dispersive. It is, therefore, in this region of the spectrum where a greater number of spectral peaks occur where the interferometer will obtain its best performances.

On the other hand, the placement of the homogeneous guide transition between the single-mode input guides and the periodic bimodal structure is fundamental to correctly excite both modes in the periodic structure. Without such a transition, only the fundamental mode would be excited in the periodic guide, thus losing its bimodal operation and its ability to cause signals to interfere. The size of the transition must be designed in order to maximise the spectral peaks produced by the bimodal interferences, such that the excitation of the higher order mode is adequate.

The interference pattern of the transmission spectrum indicates to us that constructive interference is occurring between the two modes for peaks: a phase shift produced multiple of $2\pi$. In contrast, at those minimum values of the interference pattern, the phase shift between the modes is a multiple of $\pi$. Thus, by obtaining the transmission spectrum in two different scenarios where the optical properties of the environment have been varied, the phase shift difference produced between the two cases may be calculated. To achieve a higher value of accumulated phase shift, and bearing in mind that the phase shift scales linearly with the interferometer length, conventional interferometric designs are composed of long optical paths, which is not desirable in terms of integration. In the present invention, it would not be necessary to excessively increase the interferometer length to obtain considerable accumulated phase shifts, since the group velocity of one of the optical signals is being reduced, which, in turn, is more sensitive to suffering greater variations of its phase. In the system presented in the invention, the fundamental mode acts as a reference since it accumulates a smaller phase shift by varying the optical properties of the environment, so it is the higher order mode that will act as a signal sensitive to optical variations.

The present invention also relates to an interferometer comprising the photonic crystal defined herein. When said light passes through said interferometer, interference is generated between modes $\beta 1$ and $\beta 2$ in the crystal so that a parameter of the light emitted from the photonic crystal or the interferometer is changed.

Thus, the photonic crystal and the integrated interferometric device of the present invention represent an ultra-compact product and highly sensitive to variations of the environment affecting the optical signal. In addition, it has a simple design that can be easily carried out using manufacturing processes suitable for mass production. All of this allows the implementation of this device on a chip together with other integrated optical elements, in such a way that its reduced size helps the integration of multiple designs in a reduced area.

The present invention also relates to the use of said crystal or said interferometer as a photonic modulator, as a refractive index sensor for detecting changes in the raw index of a concentration of a compound between samples deposited on said photonic crystal or said interferometer, respectively, or as a chemical or biological substance detection sensor.

A variation in an optical property of an object or environment in the vicinity of said photonic crystal or said interferometer is determined for said uses.

The present invention also relates to a method for detecting a variation in an optical property of an object or environment, using the photonic crystal or the interferometer of the present invention, wherein said method comprises the following steps:

(i) measuring a parameter of the output light of the photonic crystal or interferometer, respectively, when light of a wavelength ($\lambda$) passes through said photonic crystal at a time $T_0$, when no variation in said property of said object or environment has occurred yet;

(ii) measuring a parameter of the output light of the photonic crystal or the interferometer, respectively, at a time T, when there has been a variation in said property of said object or environment; and

(iii) determining whether there is a difference between the parameters of steps (i) and (ii) wherein, when any difference is determined, it is determined that a variation has occurred in said optical property of said object or environment.

So the time $T_0$ is before the time T. In a preferred embodiment of the present invention, the parameter of the emitted light is the free spectral range, measured as the distance between two maximum peaks in the spectral interference pattern at the output of the device, wherein there is a difference between the parameters of steps (i) and (ii), when the phase shift between spectral interference patterns of steps (i) and (ii) is greater than zero.

In another preferred embodiment of the present invention, the method comprises the further step of determining the influence of said variation by obtaining the relationship that occurs between the difference determined in step (iii), with respect to the change in the optical property of said object or environment.

**Examples:**

*Materials and methods*

Numerical simulations to obtain the band diagrams of the basic unit cell of the 1D photonic crystal were conducted using the free MIT Photonics Band (MPB) software, which calculates the eigenstates of frequency defined by Maxwell's equations in periodic dielectric structures. It uses numerical methods of Plane Wave Expansion (PWE) in fully vector and three-dimensional spaces. In particular, silicon ($n$ = 3,477) with a thermo-optic coefficient of $1.8 \times 10^{-4}$ K$^{-1}$ was used for the periodic structure, and silica ($n$ = 1,444) with a 10 nm grid-step was used as the mesh for the substrate and the coating. The first 5 TE type bands were computed, including the first 3 that have an even parity with respect to the x = 0 plane. On the other hand, simulations of transmission spectra and field excitation were numerically calculated using the CST Microwave Studio software. In more detail, a full-vector time domain 3D solver using finite integration techniques was used to simulate the entire interferometric system, including single-mode and bimodal waveguides. A hexahedral grid of 20 cells per wavelength was used for the entire structure, with silica as the background. In turn, the FFT (Fast Fourier Transform) of the field along the z-axis was obtained using 5000 points to obtain the propagated modes in the bimodal section. The excitation of the structure was performed by standard waveguide ports at the input and output, with the aim of providing the scattering parameters.

The photonic structures were manufactured on a silicon-on-insulator (SOI) wafer with a silicon layer thickness of 220 nm and a silica underlayer of 2 $\mu$m. An acceleration voltage of 30 KeV and an aperture size of 30 $\mu$m were used in the electron beam lithography process used to create the photonic structures on a negative hydrogen silsesquioxane (HSQ) resin; then, an inductively coupled plasma etch was used to transfer the designed patterns to the silicon layer. For the experimental characterisation, a continuous wave (CW) tunable laser (Keysight 81980) and a coherent TE polariser were used to vertically couple the light into the photonic structures by using cut optical fibers near grating couplers. At the output, a laser synchronised power meter (Keysight 81636B) was used to measure the response of the optical circuits. The transmitted spectra were recorded digitally by a LabVIEW application, also responsible for controlling the chip temperature by using a Peltier heater connected to the copper support of the photonic sample. A time period of 5 minutes after temperature changes was used to allow the sample to stabilise under the desired conditions. To conduct the detection experiments, the chip was placed in a sealed container and covered with the deionised water (DIW) or increasing solutions of ethanol (EtOH) in DIW directly deposited on the sample and measured after a stabilisation time of 5 minutes.

*Results*

I. Operating principle

The proposed design, shown in Figure 1, is based entirely on a silicon structure surrounded by a silica cladding, where a single-mode input waveguide, supporting the fundamental mode of transverse electric polarisation (TE), transfers its power to the first two TE even modes in the bimodal region of the 1D photonic crystal: $TE_0$ and $TE_2$. These two modes propagate through the 1D photonic crystal and, after a certain distance, interfere in the abrupt discontinuity with the single-mode output waveguide, contributing to the excitation of the fundamental TE mode at the output. Therefore, the transferred power can be expressed as a function of the accumulated phase shift between both modes in the bimodal region. Consequently, as with a conventional Mach-Zehnder interferometer (MZI), by measuring the interference pattern in the transmission spectra, information was obtained on the phase change between both modes and how it varies when a change in refractive index is induced. Furthermore, a rectangular taper is placed at the transition between the single-mode and bimodal photonic crystal waveguide for efficient modal excitation in the periodic section. In turn, the bimodal interferometric structure is composed of a repetition of a basic unit cell consisting of a transverse element or corrugation on a central rectangular waveguide (see the box of Figure 1), creating a 1D photonic crystal in the direction of propagation of the z-axis. The design parameters of the proposed unit cell are a period a = 370 nm, transverse element width $w_i$ =

220 nm, transverse element length $w_e$ = 1400 nm, central waveguide width w = 600 nm and height h = 220 nm, accessed at its input and output with a single-mode waveguide of width $w_s$ = 450 nm.

Figure 2A depicts the scatter diagram in the irreducible Brillouin zone of the designed 1D photonic crystal, showing the TE type bands that will be excited by the fundamental TE mode of the single-mode input waveguide. In particular, these bands have an even parity with respect to the x = 0 plane, since the odd parity modes will not be excited, as in the case of the first order mode (type $TE_1$), due to symmetry conditions at the interface between the single-mode waveguide and bimodal waveguide. As can be seen, the first three bands are represented, showing in solid line and dotted line the contribution of the fundamental ($TE_0$) and second order ($TE_2$) modes, respectively. The first band (I) is entirely formed by the fundamental mode, while the second and third bands (II and III) are composed of a combination of both modes. Between these two bands, a photonic band-gap (PBG) is created as a result of the anti-crossing point produced by the fundamental mode, folded into the first Brillouin zone and the higher order mode. In photonic crystal theory, when two modes of the same polarisation and parity are crossed, they are coupled and the bands are repelled, producing a dispersive behaviour similar to that obtained when a band reaches the edge of the irreducible Brillouin zone ($k_z$ = 0.5 × 2π/a). Consequently, two different bimodal regimes were obtained near the photonic band-gap for the second and third bands, although the current results focus on the third since lower group velocities can be achieved in this operating region. Therefore, a bimodal behaviour was obtained in the third band (III) with two different propagation constants and field patterns (see Figures 2B and C) for wavelengths around 1550 nm, which is the region of interest (ROI) (shaded area III in Figure 2A). The fundamental mode is strongly confined within the central waveguide of the photonic crystal, while the higher order mode is partially located in the transverse elements of the structure. Consequently, the higher order mode strongly interacts with the periodic pattern of the structure, thus producing a highly dispersive behaviour of the third band at the end of the Brillouin zone. The group velocity, which is mathematically described as the derivative of the angular frequency with respect to the wave vector ($v_g = \partial\omega/\partial k$), is given by the slope of the bands for each value of $k_z$ in the scatter plots shown above. Thus, at high wavelengths in the region of interest slow light is produced for both modes, which is not suitable for the present purposes. In contrast, at lower wavelengths, only the higher order mode exhibits a slow light behaviour as it approaches the edge of the Brillouin zone, compared to the normal dispersive behaviour of the fundamental mode, achieving a high group velocity difference between both modes in this wavelength region.

Under induced variations of the refractive index in the system, the effective index of the higher order mode drastically changes in comparison with the effective index of the fundamental mode acting as a reference. Accordingly, the low group velocity of the higher order mode critically improves the accumulated phase shift when a change in the refractive index is induced. Therefore, an effect similar to that which occurs in a Mach-Zehnder interferometer is obtained when the arm length is increased to achieve higher phase changes, but in this case by drastically slowing down the higher order mode. To do this, the influence of the design parameters in the bimodal region of interest in the third band was studied. Figure 7A shows the evolution of the dispersion ratios for the second and third bands for different values of the parameter $w_e$. The remaining design dimensions are maintained as detailed above to obtain a bimodal behaviour around 1550 nm. As can be seen in Figure 7A, as $w_e$ increases, the second and third bands shift to higher wavelengths. The contribution of the higher order mode (part of the bands represented by a dotted line) is clearly more sensitive to variations of $w_e$ than the fundamental mode (part of the bands represented by a solid line), since the higher order mode is more localised within the transverse elements of periodic structure. Having the control of the cutting frequency of the higher order mode enables designing for which wavelengths the slow light effect is produced in this way, thus obtaining the desired bimodal behaviour. Figure 7B shows the maximum group velocity difference between both modes in the slow light region of the higher order mode and the bandwidth of the bimodal region of interest as a function of $w_e$. As explained above, the group velocity difference in the region of interest increases with $w_e$ until wavelengths near the photonic band-gap are reached, where the fundamental mode is also converted to slow light. On the other hand, the bandwidth decreases due to the flattening of the higher order mode, resulting in lower wavelength bimodal regions. A $w_e$ value of 1400 nm was selected, as this configuration provides a large group velocity difference and a large bandwidth for this embodiment. The critical effect of $w_e$ can also be seen if the interference pattern of the spectrum is calculated as a sinusoidal function of the phase shift calculated from the bands of Figure 7A and for a given length. Figure 7C shows how $w_e$ plays a crucial role in obtaining a high number of destructive and constructive peaks. With a $w_e$ of 1300 nm only two interference peaks are formed in the region of interest, while increasing this parameter to 1400 nm enables observing up to 8 peaks, as if it were a Mach-Zehnder interferometer with one of its arms drastically longer than the other. In addition, the influence of the slow light of the higher order mode on the periodicity of the interference pattern should be noted (see Figure 7C), where more clustered peaks are obtained for those wavelengths where the group velocity difference is maximised.

To study the interferometric behaviour of the device, the complete configuration was analysed with 450 nm wide single-mode waveguides as input and output ports. The transmission spectra for a length of N = 150 elements are depicted in Figure 8A, without and with a 1200 nm rectangular taper between the end of the single-mode waveguide and the bimodal periodic waveguide. It can be observed that the response is almost flat when the taper is not present, since only the fundamental mode propagates through the 1D photonic crystal. By using a rectangular taper, the higher order mode is suitably excited and thus the interference pattern is clearly observed. In addition, as shown above in Figure 7C, the interference pattern is more clustered for lower wavelengths, demonstrating the dispersive behaviour of the higher order mode in this region. This behaviour appears for wavelengths around 1532 nm, near the end of the irreducible Brillouin zone for the higher order mode, where it is converted to slow light. At even lower wavelengths (i.e. below 1530 nm) only the fundamental mode is propagated and thus a single-mode transmission spectrum response is observed. The bimodal excitation for a range of taper lengths is optimised in Figure 8B, calculated as the difference between a maximum and minimum peak caused by a modal interference. An optimal amplitude modulation of about 70% is obtained for a 1200 nm long taper for the modal interference closest to the photonic band-gap. However, it should be noted that bimodal excitation decreases for lower wavelengths, as can be seen in the shaded area of the region of interest in Figure 8A. To better understand the bimodal behaviour at the interfaces, the absolute value of the electric field in the 2D plane at the output of the bimodal interferometer is plotted without and with taper for destructive interference at 1563.5 nm in Figures 8C and D, respectively. In the absence of a rectangular taper, all energy is transferred to the single-mode output waveguide, while with a taper there is destructive interference due to adequate bimodal excitation and almost no power is transmitted to the output waveguide. With the aim of demonstrating that the bands in the spectrum are due to modal interference, the component x of the 1D electric field along the z-axis was calculated for y = 0 in a bimodal periodic structure with N = 150. By applying the Fast Fourier Transform (FFT) on the propagated field, the wave vectors that are excited in the bimodal region were obtained. The results are shown in Figure 8E as a function of the normalised wave vector and for different wavelengths. Each peak of the Fast Fourier Transform corresponds to a propagation mode within the periodic waveguide. As can be seen, not only are the wave vectors of the modes within the irreducible Brillouin zone obtained, but also for the unfolded region between $k_z = 0.5 \times 2\pi/a$ and $k_z = 0.7 \times 2\pi/a$. This second Brillouin zone is a reflected image of the first region and provides information about the modes and their scattering characteristics. However, a perfect concordance between the position of the peaks and the previously calculated band diagrams is obtained, using two different simulation methods, which allow confirming the modal excitation within the 1D photonic crystal. Note that the fundamental mode at $k_z \sim 0.65 \times 2\pi/a$ has a higher intensity compared to the higher order mode at $k_z \sim 0.45 \times 2\pi/a$, which means that both modes are not equally excited and explains the results obtained in Figure 8A, with respect to the amplitude of the interference pattern in the transmission spectrum.

II. Experimental demonstration of bimodal behaviour with slow light

Bimodal interferometers were manufactured with the previously detailed design parameters and a taper with a nominal length of 1200 nm at the input and output interfaces (see Figure 9A). All the parameters of the manufactured structures perfectly match the theoretical design, except for the taper, which has a measured length of ~ 1400 nm. This difference is due to the fact that the taper was very close to the first transverse element of the 1D photonic crystal (with a gap of only 60 nm) and the latter was not resolved in manufacture (see Figure 9A). Despite this deviation, the length of the manufactured taper also remains within the optimal bimodal excitation range, as can be seen in Figure 8B, so the experimental performance is not expected to be altered. Two different lengths of bimodal photonic crystals of 74 $\mu$m and 148 $\mu$m have been considered, corresponding to a number of periodic elements of N = 200 and N = 400. The total length of the photonic sample is 0.9 mm, corresponding to the length on the chip between input and output grating couplers. Experimental transmission spectra for both configurations are shown in Figure 9C, where a photonic band-gap can be observed for wavelengths greater than 1590 nm, below which the bimodal region of interest is obtained, as predicted theoretically in the band diagram and in the propagation simulations. The raw experimental spectra, as well as the filtered data, are plotted to distinguish the bimodal interferences from the ripple caused by the Fabry-Perot resonances. The free spectral range (FSR) of the ripple is homogeneously distributed and is very similar to that calculated for a cavity distance on the chip of 0.9 mm (~ 1.5 nm), demonstrating that this is caused by the Fabry-Perot contribution. Furthermore, the results show the same free spectral range for the two different bimodal lengths considered, so that the ripple must be caused by an optical cavity common in both designs (i.e. the resonances between the access grating couplers).

The position of the maximum and minimum oscillations caused by the constructive and destructive bimodal interferences, which are marked with circles in Figure 9C, were obtained by applying a Lorentzian fit on the filtered spectra. As expected, a greater number of bimodal interferences in the spectrum is observed for structures with N = 400 compared to N = 200, as a result of increasing the physical optical length of the interferometer. To evaluate the slow light behaviour of a photonic crystal in standard Mach-Zehnder interferometer configurations, the experimental group index of the active arm ($\beta$2 mode herein) is calculated from the reference arm simulations ($\beta$1 mode). Therefore, the spectral dependence of the group index in the higher order slow light mode can be deduced from the spectral positions of the maximums $\lambda_{max}$ and minimums $\lambda_{min}$ of the interferences as:

$$n_g^{\beta 2}(\lambda) = \lambda_{max} \times \lambda_{min} / 2L(\lambda_{max} - \lambda_{min}) + n_g^{\beta 1}(\lambda) \quad (1)$$

where L is the length of the bimodal photonic crystal waveguide and $n_g^{\beta 1}$ is the fundamental mode group index acting as reference signal. The triangular and circular markers in Figure 9B represent the experimental group index in the N = 200 and N = 400 configurations using the equation described above. The bimodal slow light interferometer exhibits a group index of up to ~ 23 for the higher order mode, which matches the simulations perfectly. The fundamental mode simulated group index that has been used in equation (1) is shown with the dotted and dashed line in Figure 9B and exhibits group index values less than 5 in the region of interest.

III. Interferometric performance in dynamic systems

Once the static response is provided, to calculate the accumulated phase shift by an induced change in refractive index, the spectral shift of a given interference peak must also be considered. Furthermore, due to the dispersive behaviour of our proposed structure, the free spectral range (FSR) caused by bimodal interferences varies along the region of interest, obtaining lower values in the region of slow light. Therefore, the mean value between two adjacent free spectral ranges is used to obtain the experimental phase shift calculated as follows:

$$\Delta\varphi(\lambda) = 2\Delta\lambda / (FSR_H + FSR_L) \quad (2)$$

where $\Delta\lambda$ is the wavelength shift of the minimums produced for the induced refractive index changes and $FSR_H$ and $FSR_L$ are the free spectral ranges at higher and lower wavelengths with respect to a given minimum interference peak, respectively.

To evaluate the response of the device as an optical modulator, a Peltier heater was used to change the operating temperature of the chip. Figures 10A and 10B show the phase shift obtained as a function of wavelength for different temperature increments in the N = 200 and N = 400 configurations, respectively. In both cases, the effect of slow light was clearly seen at wavelengths around 1530 nm, where a drastic increase in phase shift was obtained, consistent with the simulations. It must be taken into account that the results of the interferometer N = 400 are double those obtained with the shortest configuration due to the double length used. An adjustment of the phase change evolution for different destructive minimum peaks when the temperature was varied in the N = 200 and N = 400 configurations, respectively, is depicted in Figures 10C and 10D, showing a perfectly linear behaviour for all available interferences. In the slow light region, phase displacement values of $\pi$ were obtained for temperature increments of 30 °C with interference of 1532 nm, corresponding to a required change in silicon refractive index of $5.4 \times 10^{-3}$ at an $L_\pi$ length of only 78 $\mu$m (see dashed lines in Figure 10c). Likewise, in the interferometer of 148 $\mu$m and at a wavelength of 1529 nm, 13.2 °C was required for a phase change $\pi$, which corresponds to a change of refractive index of the required silicon of $2.4 \times 10^{-3}$. In contrast, outside the region of slow light, phase shift values of $\pi$ were obtained for a temperature change of 75 °C for 1550 nm interference in the 148 $\mu$m long configuration, corresponding to a required silicon change of $1.35 \times 10^{-2}$ RIU (see dashed lines in Figure 10D). However, even in this regime, interferometers are highly efficient and have a large bandwidth, which also demonstrates a flexibility in the design based on the desired operation. Examples of the spectra measured in N = 200 and N = 400 configurations for the different temperatures considered, respectively, for normal and slow light operations are shown in Figures 10E and 10F. The filtered signal is also represented to clearly see the modulation response in the spectra transmitted between the on and off states. Furthermore, it should be noted that the insertion losses and the extinction rate of the raw data depend largely on the ripple of the Fabry-Perot resonances. However, if the filtered spectra are considered as the contribution of the bimodal behaviour, the insertion losses were around 2.5 dB for Figure 10E and practically negligible in the case of Figure 10F. In turn, an extinction ratio of ~ 10 dB was obtained in the slow light region, while increasing to ~ 20 dB outside this regime as a result of theoretically predicted enhanced bimodal excitation.

Additional slow light bimodal structures without the silica topcoat were also manufactured to investigate the operation of the interferometer as a sensor. The design parameters were the same as previously used to evaluate operation as an optical modulator by means of temperature changes. Their transmission spectra when different solutions of ethanol (EtOH) in deionised water (DIW) were deposited on the 1D photonic crystal interferometric structure are shown in Figure 11A. Specifically, volumes of ethanol in deionised water of 3%, 6% and 9% were considered, corresponding to linear increases in the refractive index of $1.6 \times 10^{-3}$, $3.2 \times 10^{-3}$ and $4.8 \times 10^{-3}$ RIU with respect to pure DIW according to the literature. As can be observed, the interferometric response is now obtained for lower wavelengths (interferences located around 1515 nm are now measured) since the DIW-based topcoat has a lower refractive index than that of silica. On the other hand, the spectrum shifts towards higher wavelengths by increasing the refractive index of the coating. As in the case of temperature changes, a Lorentzian fit has been made on spectral interferences to correctly obtain the minimum peaks caused by bimodal behaviour (see Figure 11A). Also, knowing the spectral shift due to the changes of the refractive index of the coating, enables calculating its corresponding phase shift using equation (2). Figure 11B shows the accumulated phase shift for the interferences with the highest sensitivity in the slow light region for a linear increase in the refractive index of the coating for the N = 200 and N = 400 configurations. Experimental sensitivity can be determined as the slope of the phase shift adjustment for different changes in the refractive index of the coating. Experimental values of up to $75.20 \times 2\pi$rad/ RIU and $150.83 \times 2\pi$rad/ RIU are obtained for a bimodal interferometer length of 74 $\mu$m and 148 $\mu$m, respectively. The results obtained clearly follow a linear evolution and present a value twice as large due to the double length used for this configuration compared to the shorter one, similarly to the previous case. Furthermore, the experimental results have been compared with the simulations applying the following equation to calculate the phase sensitivity of the interferometer:

$$S(\lambda) = \Delta\varphi / \Delta n_c = 2\pi L / \lambda \times (\acute{\omega}\, n_{eff2}/... \, n_c -... \, n\, eff1/... \, n_c) \qquad (3)$$

Where $n_c$ is the refractive index of the coating, L the length of the interferometer, and $n_{eff1}$ and $n_{eff2}$ the effective index of the fundamental and higher order mode, respectively. In standard Mach-Zehnder interferometer schemes wherein one of its arms is completely isolated, the phase sensitivity is only related to the variation of the effective index of the sensor arm. In our case, both modes interact with the variations of the coating, so the sensitivity depends on the effective index difference between them. Since the fundamental mode is strongly confined to a low group index and the higher order mode exhibits a high scattering behaviour, tremendously high sensitivity values are obtained for the proposed 1D bimodal photonic crystal waveguide. The wavelength dependence of the sensitivity is represented in Figure 11C, drastically increasing its value in the slow light region and showing a perfect concordance with the simulations. To compare these results with other interferometers of the literature of different lengths, values normalised to 1 cm have also been calculated, corresponding to almost identical experimental sensitivities of $10.62 \times 10^3\, 2\pi$rad/ RIU $\cdot$ cm and $10.19 \times 10^3\, 2\pi$rad/ RIU $\cdot$ cm for the configurations with N = 200 and N = 400, respectively, as they are normalised to a common length. Also, outside the slow light region, values around $3.5 \times 10^3\, 2\pi$rad/ RIU $\cdot$ cm are experimentally demonstrated for a wide operating range of 30 nm, which are not as good as in the slow light region but are higher than those obtained for other interferometric configurations.

IV. Discussion

The bimodal periodic structures exemplified herein provide interferometric behaviour involving higher order modes with an extremely sensitive phase shift produced by changes induced in the refractive index. Compared to other existing bimodal configurations, this design makes use of 1D photonic crystal structures with an active mode that works in the slow light regime. This effect has been enabled by active control of the band diagrams to optimise the desired bimodal behaviour in order to improve the interferometric response. This process can be extended to 2D and 3D photonic crystals.

The proposed device has been experimentally demonstrated for optical modulation and detection purposes, to determine its efficiency in dynamic systems. By changing the chip temperature, the interferometer response to small changes in the refractive index of the silicon structure was tested. Compared to other interferometers that include slow light elements, a single-channel interferometer with an area of only - 100 $\mu$m$^2$ is provided for high-efficiency temperature modulation, improving conventional Mach-Zehnder interferometer-based structures by two orders of magnitude and improving interferometric schemes, including 2D and 1D photonic crystals by more than one order of magnitude. Because of its compact design, the results suggest the use of this type of bimodal photonic crystal silicon waveguide for the integration of multiple on-chip modulators. The detection operation for different ethanol solutions in deionised water, corresponding to linear changes in the refractive index of the coating, was also demonstrated. The experimental sensitivities obtained improve the existing configurations by a factor of more than 10 in the case of traditional Mach-Zehnder interferometer configurations and around 7.5 for the Mach-Zehnder interferometer based on groove guides and bimodal silicon nitride waveguides, for the same detection length used. Furthermore, its simple, single-channel and ultra-compact design formed monolithically in silicon offers notable advantages for mass integration and low-cost production with significant implications in network interconnections or on-chip laboratory instruments, among others.

**Claims**

1. Method for maximising the phase shift between two propagation modes ($\beta_1$, $\beta_2$) of a light wave, of wavelength ($\lambda$), which is propagated through a photonic crystal structure (1), in the spatial direction in which the crystal exhibits periodicity comprising the following steps:

(a) obtaining the band diagram of the photonic crystal with periodic structure for the wave vectors (k) whose values are in the first Brillouin zone;

(b) selecting the propagation mode ($\beta_2$) of the wave ($\lambda$) in the periodic structure of the photonic crystal, wherein said mode has a slope P2 of wavelength ($\lambda$) with respect to the wave vector, of absolute value |P2|, working in slow wave regime;

(c) selecting a propagation mode ($\beta_1$) of said wave ($\lambda$), wherein said mode has a slope P1 of wavelength ($\lambda$) with respect to the wave vector, of absolute value |P1|, wherein |P1| is at least twice as large as |P2|; and

(d) causing said phase shift between the propagation modes ($\beta_1$, $\beta_2$) selected in steps (b) and (c) by propagating said wave ($\lambda$) through said photonic crystal waveguide (1), in the direction in which the crystal exhibits periodicity,

wherein said photonic crystal generates a difference in the group velocity between the propagation mode ($\beta_1$) and the higher order propagation mode ($\beta_2$), of a beam of said light of wavelength ($\lambda$), which is propagated through said photonic crystal, wherein said photonic crystal comprises a single planar semiconductor layer, **characterised in that** said planar semiconductor layer comprises, in turn:

(i) a first input terminal of said light beam and a second output terminal of said beam,
(ii) a rotational axis of symmetry, z, aligned on an axis of propagation of said light,
(iii) a height h, measured on the y-axis, perpendicular to the z-axis,
(iv) a width measured on the x-axis, perpendicular to the y- and z-axes,
(v) the following sections aligned on the z-axis:

- a first section (5) comprising a first terminal and a second terminal, of length $t_1$, measured on the z-axis and width $w_{t1}$, measured on the x-axis, wherein the first terminal of said planar semiconductor layer is the first terminal of said first section,
- a third section (6) comprising a first terminal and a second terminal, of length ts, measured on the z-axis, and width $w_{t3}$, measured on the x-axis, wherein the second terminal of said planar semiconductor layer is the second terminal of said third section,
- a second section of periodic structure (7), comprising a first terminal and a second terminal, located between the second terminal of the first section and the first terminal of the third section, wherein the second section comprises N unit cells, wherein each cell (8) comprises:

(a) a central part of length $w_i$, measured on the z-axis, and width $w_e$, measured on the x-axis, wherein said central part comprises an axis of rotational symmetry z', aligned with the z-axis; and
(b) two wings extending from said central part on the z-axis, wherein each wing is of length $(a-w_i)/2$, measured on the z-axis, and width w, measured on the x-axis, and comprises an axis of rotational symmetry z', aligned with the z-axis,

where:

- N is an integer which is at least 50;
- h is a value selected within the range of between 100 and 1000 nm;
- $t_1$ is a value selected within the range of between 500 and 3000 nm;
- $t_3$ is a value selected within the range of between 500 and 3000 nm;
- $w_{t1}$ is a value selected within the range of between 1000 and 5000 nm;
- $w_{t3}$ is a value selected within the range of between 1000 and 5000 nm;
- $w_i$ is a value selected within the range between 50 and (a - 50) nm;
- $w_e$ is a value selected within the range between 1000 and 5000 nm;
- w is a value selected within the range between 300 and 1000 nm;
- a is a value selected within the range between 200 and 1000 nm; and
- $\lambda$ is a value less than 2000 nm.

2. A photonic crystal (1) which is a waveguide capable of performing the method according to claim 1, wherein said photonic crystal generates a difference in group velocity between a propagation mode $\beta_1$ and a higher order propagation mode $\beta_2$, of a light beam of wavelength $\lambda$, which is propagated through said photonic crystal, wherein said photonic crystal comprises a single planar semiconductor layer, **characterised in that** said planar semiconductor layer comprises, in turn:

(i) a first input terminal of said light beam and a second output terminal of said beam,

(ii) a rotational axis of symmetry, z, aligned on an axis of propagation of said light,

(iii) a height h, measured on the y-axis, perpendicular to the z-axis,

(iv) a width measured on the x-axis, perpendicular to the y- and z-axes,

(v) the following sections aligned on the z-axis:

- a first section (5) comprising a first terminal and a second terminal, of length $t_1$, measured on the z-axis and width $w_{t1}$, measured on the x-axis, wherein the first terminal of said planar semiconductor layer is the first terminal of said first section,

- a third section (6) comprising a first terminal and a second terminal, of length ts, measured on the z-axis, and width $w_{t3}$, measured on the x-axis, wherein the second terminal of said planar semiconductor layer is the second terminal of said third section,

- a second section of periodic structure (7), comprising a first terminal and a second terminal, located between the second terminal of the first section and the first terminal of the third section, wherein the second section comprises N unit cells, wherein each cell (8) comprises:

(a) a central part of length $w_i$, measured on the z-axis, and width $w_e$, measured on the x-axis, wherein said central part comprises an axis of rotational symmetry z', aligned with the z-axis; and

(b) two wings extending from said central part on the z-axis, wherein each wing is of length $(a-w_i)/2$, measured on the z-axis, and width w, measured on the x-axis, and comprises an axis of rotational symmetry z', aligned with the z-axis,

where:

- N is an integer which is at least 50;
- h is a value selected within the range of between 100 and 1000 nm;
- $t_1$ is a value selected within the range of between 500 and 3000 nm;
- $t_3$ is a value selected within the range of between 500 and 3000 nm;
- $w_{t1}$ is a value selected within the range of between 1000 and 5000 nm;
- $w_{t3}$ is a value selected within the range of between 1000 and 5000 nm;
- $w_i$ is a value selected within the range between 50 and (a - 50) nm;
- $w_e$ is a value selected within the range between 1000 and 5000 nm;
- w is a value selected within the range between 300 and 1000 nm;
- a is a value selected within the range between 200 and 1000 nm; and
- $\lambda$ is a value less than 2000 nm.

3. The photonic crystal according to claim 2, comprising one single-mode input and another output guide.

4. The photonic crystal according to any of claims 2 and 3, wherein the photonic crystal may have one-dimensional, two-dimensional or three-dimensional periodicity.

5. The photonic crystal according to any of claims 2 to 4, wherein the semiconductor is silicon or doped silicon.

6. The photonic crystal according to any of claims 2 to 5, wherein:

- the semiconductor is silicon;
- the insulator is made of silica,
- N is an integer which is at least 100;
- h is a value selected within the range of between 200 and 250 nm;
- $t_1$ and $t_3$ are independently selected values within the range of between 1000 and 1600 nm;
- $w_i$ is a value selected within the range between 200 and 250 nm;
- $w_e$, $w_{t1}$ and $w_{t3}$ are independently selected values within the range between 1300 and 1500 nm;
- w is a value selected within the range between 500 and 700 nm;
- a is a value selected within the range between 350 and 400 nm; and
- $\lambda$ is a value selected within the range between 1300 and 1600 nm.

7. The photonic crystal according to any of claims 2 to 6, wherein the number N of unit cells of the second section (2) is an integer selected within the range between 200 and 400.

8. The photonic crystal according to any of claims 2 to 7, wherein the propagation modes ($\beta_1$, $\beta_2$) are of transverse electric (TE) or transverse magnetic (TM) type.

9. The photonic crystal according to any of claims 2 to 8, wherein the group velocity of propagation mode $\beta_2$ is lower than the group velocity of propagation mode $\beta_1$.

10. An interferometer comprising the photonic crystal according to any of claims 2 to 9.

11. Use of the photonic crystal according to any of claims 2 to 9, or the interferometer according to claim 10, as a photonic modulator, as a refractive index sensor for detecting changes in the raw index of a concentration of a compound between samples deposited on said photonic crystal or said interferometer, respectively, or as a chemical or biological substance detection sensor.

12. Method for detecting a variation in an optical property of an object or environment, using the photonic crystal according to any of claims 2 to 9 or the interferometer according to claim 10, wherein said method comprises the following steps:

    (i) measuring a parameter of the output light of the photonic crystal or interferometer, respectively, when light of a wavelength ($\lambda$) passes through said photonic crystal at a time $T_0$, when no variation in said property of said object or environment has occurred yet;
    (ii) measuring a parameter of the output light of the photonic crystal or the interferometer, respectively, at a time T, when there has been a variation in said property of said object or environment;
    (iii) determining whether there is a difference between the parameters of steps (i) and (ii) wherein, when any difference is determined, it is determined that a variation has occurred in said optical property of said object or environment.

13. The method according to claim 12, wherein the parameter of the output light in steps (i) and (ii) is the free spectral range, measured as the distance between two maximum or minimum peaks in the spectral interference pattern at the output of the device, wherein there is a difference between the parameters of steps (i) and (ii), when the phase shift between spectral interference patterns of steps (i) and (ii) is greater than zero.

14. The method according to any of claims 12 and 13, comprising the further step of determining the influence of said variation by obtaining the relationship that occurs between the difference determined in step (iii), with respect to the change in the optical property of said object or environment.

**Figure 1**

Figure 2

A.

**Figure 2 (cont.)**

B.

C.

Figure 3

Figure 4

Figure 5

Figure 6

**Figure 7**

A.

B.

**Figure 7 (cont.)**

C.

**Figure 8**

A

B.

**Figure 8 (cont.)**

C.

D.

Figure 8 (cont.)

E.

**Figure 9**

A.

B.

**Figure 9 (cont.)**

C.

**Figure 10**

A.

B.

**Figure 10 (cont.)**

C.

D.

**Figure 10 (cont.)**

E.

F.

**Figure 11**

**A.**

**B.**

**Figure 11 (cont.)**

C.

**INTERNATIONAL SEARCH REPORT**

| International application No. |
| --- |
| PCT/ES2021/070761 |

**A. CLASSIFICATION OF SUBJECT MATTER**

*G02F1/225* (2006.01)

According to International Patent Classification (IPC) or to both national classification and IPC

**B. FIELDS SEARCHED**

Minimum documentation searched (classification system followed by classification symbols)
G02F, G08F, G02B, B60J, H01L

Documentation searched other than minimum documentation to the extent that such documents are included in the fields searched

Electronic data base consulted during the international search (name of data base and, where practicable, search terms used)

EPODOC, INVENES, WPI, INSPEC

**C. DOCUMENTS CONSIDERED TO BE RELEVANT**

| Category* | Citation of document, with indication, where appropriate, of the relevant passages | Relevant to claim No. |
| --- | --- | --- |
| A | TORRIJOS-MORÁN, L. et al.: "High Sensitivity Optical Sensing Based on Modal Interferences in One-Dimensional Photonic Crystals". Proceedings 2019, 06/11/2018, Vol. 4, N° 20, pages 1-7 [on line][retrieved on 20/08/2020], see pages 1-5. | 1-14 |
| A | TORRIJOS-MORÁN, L. et al.: "Single-channel bimodal interferometric sensor using subwavelength structures". Optics Express, 06/03/2019, Vol. 27, pages 8168-8179 [on line][retrieved the 20/08/2020], see the whole document. | 1-14 |

☒ Further documents are listed in the continuation of Box C.　　　☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 24/01/2022 | **(01/02/2022)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> Ó. González Peñalba <br><br><br> Telephone No. 91 3495475 |

Form PCT/ISA/210 (second sheet) (January 2015)

**INTERNATIONAL SEARCH REPORT**

| International application No. |
| --- |
| PCT/ES2021/070761 |

C (continuation).                           DOCUMENTS CONSIDERED TO BE RELEVANT

| Category * | Citation of documents, with indication, where appropriate, of the relevant passages | Relevant to claim No. |
| --- | --- | --- |
| A | TORRIJOS-MORÁN, L. et al.: "Experimental study of subwavelength grating bimodal waveguides as ultrasensitive interferometric sensors". Optical Letters, 19/09/2019, Vol. 44, N° 19, pages 4702 - 4705 [on line][retrieved on 15/08/2020], see the whole document. | 1-14 |
| A | US 2019/0067830 A1 (XU, X. ET AL.) 28/02/2019, the whole document. | 1-14 |
| A | US 2017/029981 A1 (WESSELS, B. ET AL.) 19/10/2017, the whole document. | 1-14 |
| A | XU, X. et al.: "Periodic waveguide structures for on-chip modulation and sensing". Japanese Journal of Applied Physics, 12/07/2018, Vol. 57, pages 1-9 [on line][retrieved on 20/08/2020], see the whole document. | 1-14 |

Form PCT/ISA/210 (continuation of second sheet) (January 2015)

## INTERNATIONAL SEARCH REPORT

Information on patent family members

International application No.

PCT/ES2021/070761

| Patent document cited in the search report | Publication date | Patent family member(s) | Publication date |
|---|---|---|---|
| US2019067830 A1 | 28.02.2019 | US10490906 B2 | 26.11.2019 |
| US2017299811 A1 | 19.10.2017 | WO2017180217 A1 US10310181 B2 | 19.10.2017 04.06.2019 |

Form PCT/ISA/210 (patent family annex) (January 2015)